# EUROPÄISCHE PATENTSCHRIFT

(11) **EP 0 845 497 B1**
(45) Veröffentlichungstag und Bekanntmachung des Hinweises auf die Patenterteilung: **19.07.2006**
(21) Anmeldenummer: 97120061.3
(22) Anmeldetag: 17.11.1997
(51) Int. Cl.: C08L 51/04, C08L 55/02

(54) **Verbesserte thermoplastische Formmassen vom ABS-Typ**
Improved mouldings of ABS type thermoplasts
Masses à moules thermoplastiques améliorées du type ABS

(30) Priorität: 28.11.1996 DE 19649249
(43) Veröffentlichungstag der Anmeldung: 03.06.1998
(73) Patentinhaber: LANXESS Deutschland GmbH, 51369 Leverkusen (DE)
(72) Erfinder: Eichenauer, Herbert, Dr., 41539 Dormagen (DE)

(56) Entgegenhaltungen:
- WO-A-89/05836
- WO-A-91/15544
- US-A- 4 731 420

## Beschreibung

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen mit hohen Anforderungen an die Zähigkeit bei Schlageinwirkung, insbesondere auch bei tiefen Temperaturen, sowie die Möglichkeit zur gezielten Einstellung (Abstufungen zwischen glänzend und matt) des Oberflächenglanzes (z.B. im Automobilbereich oder zur Herstellung von Gehäuseteilen).

ABS-Produkte mit hohen Zähigkeiten und relativ hohem Oberflächenglanz lassen sich unter Verwendung von herkömmlichem Emulsions-ABS bei Einsatz hoher Kautschukmengen herstellen; damit verbunden sind jedoch Nachteile bei anderen Eigenschaften, z.B. E-Modul, Wärmeformbeständigkeit und thermoplastische Fließfähigkeit.

ABS-Produkte mit relativ niedrigem Oberflächenglanz sind z.B. durch Polymerisation nach dem Lösungs- oder Massepolymerisationsverfahren zugänglich; allerdings werden nach diesem Verfahren keine Produkte mit hohen Tieftemperaturzähigkeiten erhalten.

Durch Abmischen von herkömmlichen Emulsions-ABS-Typen mit Lösungs- oder Masse-ABS-Typen lassen sich zwar punktuelle Verbesserungen erzielen (vgl. z.B. US-PS 4 430 478), die hohen Anforderungen an Zähigkeit und Fließfähigkeit bei gleichzeitigem Erhalt des für Masse-ABS charakteristischen niedrigen Oberflächenglanzes werden durch diese Werkstoffe jedoch nicht erfüllt.

Auch ist bekannt, durch Massepolymerisation hergestellte ABS-Polymerisate mit verschiedenen, durch Emulsionspolymerisation hergestellten Pfropfkautschukpolymerisaten mit kleiner und großer Teilchengröße abzumischen (vgl. z.B. US 4 430 478, US 4 713 420, EP 190 884, EP 390 781, EP 436 381 und dort zitierte Literatur), die resultierenden Produkte haben jedoch keine verbesserte Tieftemperaturzähigkeit.

Es wurde gefunden, daß durch Kombination von speziellen, durch Emulsionspolymerisation hergestellten Pfropfpolymerisaten mit durch Lösungs-, Masse- oder Suspensionspolymerisation hergestellten ABS-Polymerisaten Produkte mit ausgezeichneten Zähigkeitswerten, insbesondere sehr hohen Tieftemperaturzähigkeiten erhalten werden.

Gegenstand der Erfindung sind verbesserte thermoplastische Formmassen vom ABS-Typ, enthaltend
I) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart einer Mischung aus einem Butadienpolymerisatlatex (A) mit einem Teilchendurchmesser d₅₀ ≤320 nm, vorzugsweise 260 bis 310 nm, einer Breite der Teilchendurchmesserverteilung (gemessen als d₉₀-d₁₀ aus der integralen Teilchendurchmesserverteilung) von 30 bis 100 nm, vorzugsweise von 40 bis 80 nm, und einem Gelgehalt ≤70 Gew.-%, vorzugweise 40 bis 65 Gew.-%, und einem Butadienpolymerisatlatex (B) mit einem Teilchendurchmesser d₅₀ ≥370 nm, vorzugsweise 380 bis 450 nm, einer Breite der Teilchendurchmesserverteilung (gemessen als d₉₀-d₁₀ aus der integralen Teilchendurchmesserverteilung) von 50 bis 500 nm, vorzugsweise von 100 bis 400 nm, und einem Gelgehalt ≥70 Gew.-%, vorzugsweise 75 bis 90 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 25:75 bis 70:30 ist,
II) mindestens ein Pfropfpolymerisat, welches erhältlich ist durch Lösungs-, Masse- oder Suspensionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart eines Kautschuks, wobei der Kautschuk 0 bis 50 Gew.-% eines weiteren Vinylmonomeren copolymerisiert enthält und wobei das Massenverhältnis von eingesetzten Pfropfmonomeren zu eingesetztem Kautschuk 50:50 bis 97:3, vorzugsweise 70:30 bis 95:5, ist und gegebenenfalls
III) mindestens ein kautschukfreies Copolymerisat aus Styrol und Acrylnitril im Gewichtsverhältnis 90:10 bis 50:50, wobei Styrol und/oder Acrylnitril ganz oder teilweise durch α-Methylstyrol, Methylmethacrylat oder N-Phenylmaleinimid ersetzt werden kann.

Im allgemeinen können die erfindungsgemäßen Formmassen enthalten
1 bis 50 Gew.-Teile. bevorzugt 2,5 bis 45 Gew.-Teile und besonders bevorzugt 5 bis 40 Gew.-Teile I
50 bis 99 Gew.-Teile. bevorzugt 55 bis 97,5 Gew.-Teile und besonders bevorzugt 60 bis 95 Gew.-Teile II
0 bis 100 Gew.-Teile. bevorzugt 0 bis 80 Gew.-Teile und besonders bevorzugt 0 bis 60 Gew.-Teile III

Außerdem können die erfindungsgemäßen Fonnmassen weitere kautschukfreie, nicht aus Vinylmonomeren aufgebaute Thermoplastharze enthalten.

Die weiteren nicht aus Vinylmonomeren aufgebauten Thermoplasten kann man in Mengen von 0 bis 500 Gew.-Teilen, bezogen auf 100 Gew.-Teile I + II + III, zusetzen.

Bei der Pfropfpolymerisation zur Herstellung der Komponente I) wird ein Gemisch aus mindestens zwei Butadienpolymerisatlatices, mindestens je einen von Typ (A) und (B), eingesetzt. Das Gewichtsverhältnis (A):(B) ist, bezogen auf den jeweiligen Feststoffanteil der Latices, vorzugsweise 90:10 bis 10:90, besonders bevorzugt 60:40 bis 30:70.

Die Butadienpolymerisatlatices (A) und (B) können durch Emulsionspolymerisation von Butadien hergestellt werden. Diese Polymerisation ist bekannt und z.B. in Houben-Weyl, Methoden der Organischen Chemie, Makromolekulare Stoffe, Teil 1, S. 674 (1961), Thieme Verlag Stuttgart, beschrieben. Als Comonomere können bis zu 50 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, C₁-C₄-Alkylstyrole, C₁-C₈-Alkylacrylate, C₁-C₈-Alkylmethacrylate, Alkylenglycoldiacrylate, Alkylenglykoldimethacrylate, Divinylbenzol; vorzugsweise wird Butadien alleine eingesetzt. Es ist auch möglich, nach bekannten Methoden zunächst ein feinteiliges Butadienpolymerisat herzustellen und es anschließend in bekannter Weise zur Einstellung der erforderlichen Teilchendurchmesser zu agglomerieren.

Einschlägige Techniken sind beschrieben (vergl. EP-PS 0 029 613; EP-PS 0 007 810; DD-PS 144 415 DE-AS 1 233 131; DE-AS 1 258 076; DE-OS 2 101 650; US-PS 1 379 391).

Ebenfalls kann nach der sogenannten Saatpolymerisationstechnik gearbeitet werden, bei der zunächst ein feinteiliges Butadienpolymerisat hergestellt und dann durch Weiterumsatz mit Butadien enthaltenden Monomeren zu größeren Teilchen weiterpolymerisiert wird.

Prinzipiell kann man die Butadienpolymerisatlatices (A) und (B) auch herstellen durch Emulgieren von feinteiligen Butadienpolymerisaten in wäßrigen Medien (vergl. japanische Patentanmeldung 55 125 102).

Der Butadienpolymerisatlatex (A) besitzt einen mittleren Teilchendurchmesser d₅₀ ≤ 320 nm, vorzugsweise 260 bis 310 nm, eine Breite der Teilchendurchmesserverteilung (gemessen als d₉₀-d₁₀ aus der integralen Teilchendurchmesserverteilung) von 30 bis 100 nm, vorzugsweise von 40 bis 80 nm, und einen Gelgehalt ≤ 70 Gew.-%, vorzugsweise 40 bis 65 Gew.-%.

Der Butadienpolymerisatlatex (B) besitzt einen mittleren Teilchendurchmesser d₅₀ ≥ 370 nm, vorzugsweise 380 bis 450 nm, eine Breite der Teilchendurchmesserverteilung (gemessen als d₉₀-d₁₀ aus der integralen Teilchendurchmesserverteilung) von 50 bis 500 nm, vorzugsweise von 100 bis 400 nm, und einen Gelgehalt ≥ 70 Gew.-%, vorzugsweise 75 bis 90 Gew.-%.

Die mittleren Teilchendurchmesser d₅₀ sowie die d₁₀- und d₉₀-Werte können durch Ultrazentrifugenmessung ermittelt werden (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A) und (B) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgatoren können die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von C₁₀-C₁₈-Fettsäuren, disproportionierte Abietinsäure) eingesetzt.

Die Pfropfpolymerisation kann so durchgeführt werden, daß das Monomerengemisch kontinuierlich zu dem Gemisch der Butadi enpolymerisatlatices (A) und (B) gegeben und polymerisiert wird.

Dabei werden bevorzugt spezielle Monomer: Kautschuk-Verhältnisse eingehalten und die Monomeren in einer bekannten Weise zum Kautschuklatex gegeben.

Zur Erzeugung der erfindungsgemäßen Komponente I) werden vorzugsweise 25 bis 70 Gew.-Teile, besonders bevorzugt 30 bis 60 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 30 bis 75 Gew.-Teilen, besonders bevorzugt 40 bis 70 Gew.-Teilen (jeweils bezogen auf Feststoff) des Butadienpolymerisatlatex-Gemisches aus (A) und (B) polymerisiert.

Die bei dieser Pfropfpolymerisation eingesetzten Monomeren sind vorzugsweise Mischungen aus Styrol und Acrylnitril im Gew.-Verhältnis 90:10 bis 50:50, besonders bevorzugt im Gew.-Verhältnis 65:35 bis 75:25, wobei Styrol und/oder Acrylnitril ganz oder teilweise durch copolymerisierbare Monomere, vorzugsweise durch α-Methylstyrol, Methylmethacrylat oder N-Phenylmaleinimid ersetzt werden können.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe).
Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. H₂O₂, Di-tert.-butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium-, oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium vorzugsweise zusätzlich Schwermetallionen vorhanden sind (siehe Houben-Weyl, Methoden der Organischen Chemie, Band 14/1, S. 263 bis 297).

Die Polymerisationstemperatur ist 25°C bis 160°C, vorzugsweise 40°C bis 90°C. Geeignete Emulgatoren sind oben angegeben.

Zur Erzeugung der erfindungsgemäßen Komponente I) kann die Pfropfpolymerisation vorzugsweise durch Monomerenzulauf derart durchgeführt werden, daß innerhalb der ersten Hälfte der Gesamtmonomerzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Die Herstellung der Komponente II) ist bekannt (vgl. z.B. DE-OS 1 300 241, DE-OS 2 659 175, EP 67 536, EP 103 657, EP 412 801, EP 505 798, US 4 252 911, US 4 362 850, US 5 286 792 sowie die in diesen Schriften zitierte Literatur).

Es kann Styrol und Acrylnitril im Gewichtsverhältnis 90:10 bis 50:50, vorzugsweise im Gewichtsverhältnis 65:35 bis 75:25 polymerisiert werden, wobei Styrol und/oder Acrylnitril ganz oder teilweise durch copolymerisierbare Monomere, vorzugsweise durch α-Methylstyrol, Methylmethacrylat oder N-Phenylmaleinimid, ersetzt werden kann, in Gegenwart eines löslichen Kautschuks nach bekannten Methoden der Lösungs-, Masse- oder Suspensionspolymerisation.

Es werden Kautschuke mit einer Glasübergangstemperatur ≤10°C eingesetzt; bevorzugt sind Polybutadien, Butadien/Styrol-Copolymerisate (z.B. statistische Copolymerisate, Blockcopolymerisate, Sterncopolymerisate), Butadien/Acrylnitril-Copolymerisate und Polyisopren.

Besonders bevorzugte Kautschuke zur Herstellung der Komponente II) sind Polybutadien und Butadien/Styrol-Copolymerisate.

Die Kautschukgehalte der erfindungsgemäßen Komponente II) sind 3 bis 50 Gew.-%, vorzugsweise 5 bis 30 Gew.-%, und besonders bevorzugt 6 bis 25 Gew.-%.

Die Kautschuke liegen in der Komponente II) in Form von Kautschukphasen mit mittleren Teilchendurchmessern von ca. 100 nm bis über 10 000 nm vor, vorzugsweise werden ABS-Polymerisate mit mittleren Teilchendurchmessern der Kautschukphase von 200 nm bis 5 000 nm, besonders bevorzugt 400 nm bis 2 000 nm eingesetzt.

Als gegebenenfalls zusätzlich eingesetzte kautschukfreie Copolymerisate III) werden vorzugsweise Copolymerisate des Styrols und Acrylnitrils im Gewichtsverhältnis 90:10 bis 50:50 verwendet, wobei Styrol und/oder Acrylnitril ganz oder teilweise durch α-Methylstyrol, Methylmethacrylat oder N-Phenylmaleinimid ersetzt werden kann.

Diese Copolymerisate besitzen vorzugsweise mittlere Molekulargewichte M̅_{w} von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-AS 1 495 626, DE-OS 2 232 877, DE-OS 2 703 376, DE-OS 2 714 544, DE-OS 3 000 610, DE-OS 3 832 396, DE-OS 3 077 934), z.B. herstellbar durch Umsetzung von Diphenolen der Formeln (I) und (II) 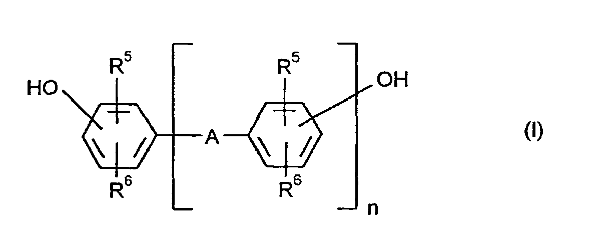 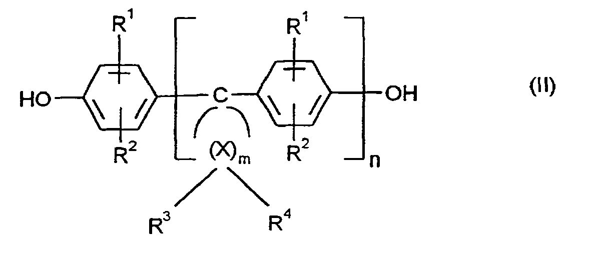 worin
- A: eine Einfachbindung, C₁-C₅-Alkylen, C₂-C₅-Alkyliden, C₅-C₆-Cycloalkyliden, -O-, -S-, -SO-, -SO₂- oder -CO- ist,
- R⁵ und R⁶: unabhängig voneinander für Wasserstoff, Methyl oder Halogen, insbesondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂₋Aralkyl, bevorzugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Wasserstoff oder C₁-C₆-Alkyl bedeuten und
- X: Kohlenstoff bedeutet,
mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{w}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestem oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Bevorzugte erfindungsgemäße Formmassen enthalten 1 bis 50 Gew.-Teile, vorzugsweise 2,5 bis 45 Gew.-Teile und besonders bevorzugt 5 bis 40 Gew.-Teile Pfropfpolymerkomponente I) und 50 bis 99 Gew.-Teile, vorzugsweise 55 bis 97,5 Gew.-Teile und besonders bevorzugt 60 bis 95 Gew.-Teile, Pfropfpolymerkomponente II).

Falls zusätzlich Copolymerkomponente III) verwendet wird, beträgt die Menge bis zu 100 Gew.-Teilen, vorzugsweise bis zu 80 Gew.-Teilen und besonders bevorzugt bis zu 60 Gew.-Teilen, Komponente III).

Die Herstellung der erfindungsgemäßen Formmassen erfolgt durch Vermischen der Komponenten I), II) und gegebenenfalls III) auf üblichen Mischaggregaten (vorzugsweise auf Mehrwalzenstühlen, Mischextrudern oder Innenknetern).

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

### Beispiele

### Komponenten:

### ABS-Pfropfpolymerisat 1 (Komponente I))

29 Gew.-Teile (gerechnet als Feststoff) eines durch radikalische Polymerisation hergestellten anionisch emulgierten Polybutadienlatex mit einem d₅₀-Wert von 282 nm, einem d₉₀-d₁₀-Wert von 48 nm und einem Gelgehalt von 49 Gew.-% und 29 Gew.-Teile (gerechnet als Feststoff) eines durch radikalische Polymerisation hergestellten anionisch emulgierten Polybutadienlatex mit einem d₅₀-Wert von 432 nm, einem d₉₀-d₁₀-Wert von 128 nm und einem Gelgehalt von 81 Gew.-% werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird. Danach werden 42 Gew.-Teile eines Gemisches aus 73 Gew.-% Styrol und 27 Gew.-% Acrylnitril und 0,1 Gew.-Teile tert.-Dodecylmercaptan innerhalb 4 Stunden derart zugegeben, daß innerhalb der ersten 2 Stunden 70 Gew.-% der Gesamtmonomerenmenge zum Reaktionsgemisch zudosiert werden, parallel dazu wird 1 Gew.-Teil (gerechnet als Festsubstanz) des Natriumsalzes eines Harzsäuregemisches (Dresinate 731, gelöst in alkalisch eingestelltem Wasser) über 4 Stunden zudosiert. Nach einer 4-stündigen Nachreaktionszeit wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C im Vakuum getrocknet.

### ABS-Pfropfpolymerisat 2 (Vergleichsmaterial, nicht erfindungsgemäß)

Die unter "ABS-Pfropfpolymerisat 1" beschriebene Vorschrift wurde wiederholt, wobei anstelle des Polybutadienlatexgemisches 58 Gew.-Teile (gerechnet als Feststoff) des Polybutadienlatex mit einem d₅₀-Wert von 282 nm, einem d₉₀-d₁₀₋Wert von 48 nm und einem Gelgehalt von 49 Gew.-% eingesetzt wurden.

### ABS-Pfropfpolymerisat 3 (Vergleichsmaterial, nicht erfindungsgemäß)

Die unter "ABS-Pfropfpolymerisat 1" beschriebene Vorschrift wurde wiederholt, wobei anstelle des Polybutadienlatexgemisches 58 Gew.-Teile (gerechnet als Feststoff) des Polybutadienlatex mit einem d₅₀-Wert von 432 nm, einem d₉₀-d₁₀-Wert von 128 nm und einem Gelgehalt von 81 Gew.-% eingesetzt wurden.

### ABS-Pfropfpolymerisat 4 (Komponente II))

Masse-ABS Magnum 3504 (Dow) mit einem Kautschukgehalt von ca. 10 Gew.-% und einem mittleren Teilchendurchmesser der Kautschukphase von ca. 900 nm.

### ABS-Pfropfpolymerisat 5 (Komponente II))

Durch Suspensionspolymerisation hergestelltes ABS-Polymerisat mit einem Kautschukgehalt von ca. 15 Gew.-% (Styrol:Acrylnitril-Gewichtsverhältnis = 74:26) und einem mittleren Teilchendurchmesser der Kautschukphase von ca. 800 nm.

### Harzkomponente 1 (Komponente III))

Statistisches Styrol/Acrylnitril Copolymerisat (Styrol:Acrylnitril-Gewichtsverhältnis 72:28) mit einem M̅_{w} von ca. 85 000 und M̅_{w}/M̅ₙ-1 ≤2 erhalten durch radikalische Lösungspolymerisation.

### Formmassen

Die oben beschriebenen Polymerkomponenten werden in den in Tabelle 1 angegebenen Anteilen, 2 Gew.-Teilen Ethylendiaminbisstearylamid und 0,1 Gew.-Teilen eines Silikonöls in einem Innenkneter vermischt und nach Granulierung zu Prüfstäben und zu einer ebenen Platte (zur Beurteilung der Oberfläche) verarbeitet.

### Folgende Daten wurden ermittelt:

Kerbschlagzähigkeit bei Raumtemperatur (aₖ^{RT}) und bei -40°C (aₖ^{-40°C}) nach ISO 180/1A (Einheit: kJ/m²), Kugeldruckhärte (H_{c}) nach DIN 53 456 (Einheit: N/mm²), Fließverhalten durch Messung des notwendigen Fülldruckes bei 240°C (Einheit: bar) (siehe F. Johannaber, Kunststoffe 74 (1984), 1, Seiten 2-5) und Glanzverhalten nach DIN 67 530 bei einem Reflektionswinkel von 20° (Reflektometerwert).

Aus den Beispielen (Prüfdaten siehe Tabelle 2) ist ersichtlich, daß sich die erfindungsgemäßen Formmassen durch sehr hohe Zähigkeitswerte, insbesondere bei tiefen Temperaturen, unter Erhalt der sonstigen Eigenschaften (insbesondere gute thermoplastische Verarbeitbarkeit und niedriger Glanzgrad) auszeichnen.

**Tabelle 1 Zusammensetzungen der Formmassen**

| **Beispiel** | **ABS-Pfropfpolymer 1 (Gew.-Teile)** | **ABS-Pfropfpolymer 2 (Gew.-Teile)** | **ABS-Pfropfpolymer 3 (Gew.-Teile)** | **ABS-Pfropfpolymer 4 (Gew.-Teile)** | **ABS-Pfropfpolymer 5 (Gew.-Teile)** | **Harzkomponente 1 (Gew.-Teile)** |
|---|---|---|---|---|---|---|
| 1 | 10 | - | - | 90 | - | - |
| 2 | 20 | - | - | 80 | - | - |
| 3 | 30 | - | - | 70 | - | - |
| 4 (Vergleich) | - | 10 | - | 90 | - | - |
| 5 (Vergleich) | - | 20 | - | 80 | - | - |
| 6 (Vergleich) | - | 30 | - | 70 | - | - |
| 7 (Vergleich) | - | - | 10 | 90 | - | - |
| 8 (Vergleich) | - | - | 20 | 80 | - | - |
| 9 (Vergleich) | - | - | 30 | 70 | - | - |
| 10 | 20 | - | - | - | 80 | - |
| 11 | 30 | - | - | - | 70 | - |
| 12 (Vergleich) | - | 20 | - | - | 80 | - |
| 13 (Vergleich) | - | 30 | - | - | 70 | - |
| 14 (Vergleich) | - | - | 20 | - | 80 | - |
| 15 (Vergleich) | - | - | 30 | - | 70 | - |
| 16 | 20 | - | - | 60 | - | 20 |
| 17 (Vergleich) | - | 20 | - | 60 | - | 20 |
| 18 (Vergleich) | - | - | 20 | 60 | - | 20 |
| 19 | 20 | - | - | - | 60 | 20 |
| 20 (Vergleich) | - | 20 | - | - | 60 | 20 |
| 21 (Vergleich) | - | - | 20 | - | 60 | 20 |

**Tabelle 2 Prüfdaten der Formmassen**

| **Beispiel** | **a**_{**k**}^{**RT**} **(kJ/m**^{**2**}**)** | **a**_{**k**}^{**-40°C**} **(kJ/m**^{**2**}**)** | **H**_{**c**} **(N/mm**^{**2**}**)** | **Fülldruck (bar)** | **Glanzgrad** |
|---|---|---|---|---|---|
| 1 | 35,9 | 15,6 | 76 | 172 | 72 |
| 2 | 43,1 | 26,5 | 68 | 182 | 72 |
| 3 | 45,7 | 30,2 | 59 | 189 | 67 |
| 4 (Vergleich) | 32,5 | 11,4 | 73 | 175 | 70 |
| 5 (Vergleich) | 35,3 | 14,8 | 66 | 184 | 70 |
| 6 (Vergleich) | 38,3 | 19,6 | 56 | 190 | 71 |
| 7 (Vergleich) | 31,8 | 10,9 | 77 | 171 | 67 |
| 8 (Vergleich) | 33,7 | 14,5 | 68 | 178 | 73 |
| 9 (Vergleich) | 30,6 | 18,4 | 59 | 182 | 71 |
| 10 | 37,6 | 23,4 | 61 | 169 | 66 |
| 11 | 39,9 | 27,7 | 59 | 179 | 69 |
| 12 (Vergleich) | 34,5 | 15,2 | 60 | 170 | 66 |
| 13 (Vergleich) | 35,1 | 15,1 | 56 | 181 | 71 |
| 14 (Vergleich) | 33,9 | 13,0 | 61 | 169 | 53 |
| 15 (Vergleich) | 32,4 | 15,9 | 58 | 173 | 70 |
| 16 | 40,1 | 18,7 | 80 | 163 | 72 |
| 17 (Vergleich) | 32,4 | 11,0 | 76 | 164 | 73 |
| 18 (Vergleich) | 30,0 | 10,4 | 79 | 159 | 78 |
| 19 | 32,6 | 13,9 | 73 | 153 | 72 |
| 20 (Vergleich) | 28,1 | 8,7 | 70 | 155 | 73 |
| 21 (Vergleich) | 27,3 | 9,8 | 72 | 147 | 69 |

## Patentansprüche

1. Thermoplastische Formmassen vom ABS-Typ enthaltend
I) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart einer Mischung aus einem Butadienpolymerisatlatex (A) mit einem Teilchendurchmesser d₅₀ ≤320 nm, einer Breite der Teilchendurchmesserverteilung (gemessen als d₉₀-d₁₀ aus der integralen Teilchendurchmesserverteilung) von 30 bis 100 nm, und einem Gelgehalt ≤70 Gew.-%, und einem Butadienpolymerisatlatex (B) mit einem Teilchendurchmesser d₅₀ ≥370 nm, einer Breite der Teilchendurchmesserverteilung (gemessen als d₉₀-d₁₀ aus der integralen Teilchendurchmesserverteilung) von 50 bis 500 nm, und einem Gelgehalt ≥70 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 25:75 bis 70:30 ist,
II) mindestens ein Pfropfpolymerisat, welches erhältlich ist durch Lösungs-, Masse- oder Suspensionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart eines Kautschuks, wobei der Kautschuk 0 bis 50 Gew.-% eines weiteren Vinylmonomeren copolymerisiert enthält und wobei das Massenverhältnis von eingesetzten Pfropfmonomeren zu eingesetztem Kautschuk 50:50 bis 97:3 ist und gegebenenfalls
III) mindestens ein kautschukfreies Copolymerisat aus Styrol und Acrylnitril im Gewichtsverhältnis 90:10 bis 50:50, wobei Styrol und/oder Acrylnitril ganz oder teilweise durch α-Methylstyrol, Methylmethacrylat oder N-Phenylmaleinimid ersetzt werden kann.

2. Thermoplastische Formmassen nach Anspruch 1, worin das Pfropfpolymerisat I) durch Monomerenzulauf zum Gemisch der Butadienpolymerisatlatices (A) und (B) so hergestellt worden ist, daß innerhalb der ersten Hälfte der Monomerenzulaufzeit 55 bis 90 Gew.-% der Monomeren zudosiert werden.

3. Thermoplastische Formmassen vom ABS-Typ enthaltend
I) mindestens ein Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart einer Mischung aus einem Butadienpolymerisatlatex (A) mit einem Teilchendurchmesser d₅₀ von 260 bis 310 nm, einer Breite der Teilchendurchmesserverteilung (gemessen als d₉₀-d₁₀ aus der integralen Teilchendurchmesserverteilung) von 40 bis 80 nm, und einem Gelgehalt von 40 bis 65 Gew.-%, und einem Butadienpolymerisatlatex (B) mit einem Teilchendurchmesser d₅₀ von 380 bis 450 nm, einer Breite der Teilchendurchmesserverteilung (gemessen als d₉₀-d₁₀ aus der integralen Teilchendurchmesserverteilung) von 100 bis 400 nm, und einem Gelgehalt von 75 bis 90 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 25:75 bis 70:30 ist,
II) mindestens ein Pfropfpolymerisat, welches erhältlich ist durch Lösungs-, Masse- oder Suspensionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart eines Kautschuks, wobei der Kautschuk 0 bis 50 Gew.-% eines weiteren Vinylmonomeren copolymerisiert enthält und wobei das Massenverhältnis von eingesetzten Pfropfmonomeren zu eingesetztem Kautschuk 70:30 bis 95:5 ist und gegebenenfalls
III) mindestens ein kautschukfreies Copolymerisat aus Styrol und Acrylnitril im Gewichtsverhältnis 90:10 bis 50:50, wobei Styrol und/oder Acrylnitril ganz oder teilweise durch α-Methylstyrol, Methylmethacrylat oder N-Phenylmaleinimid ersetzt werden kann.

4. Thermoplastische Formmassen nach Anspruch 3, worin das Pfropfpolymerisat I) durch Monomerenzulauf zum Gemisch der Butadienpolymerisatlatices (A) und (B) so hergestellt wird, daß innerhalb der ersten Hälfte der Monomerenzulaufzeit 60 bis 80 Gew.-% der Monomeren zudosiert werden.

5. Thermoplastische Formmassen nach Anspruch 1, enthaltend zusätzlich mindestens ein Harz ausgewählt aus aromatischem Polycarbonat, aromatischem Polyestercarbonat, Polyester, Polyamid.

6. Verwendung der thermoplastischen Formmassen nach Anspruch 1 zur Herstellung von Formteilen.

## Claims

1. Thermoplastic moulding composition of ABS type comprising:
I) at least one graft polymer obtained by an emulsion polymerisation of styrene and acrylonitrile in a weight ratio of 90:10 to 50:50, wherein the styrene and/or the acrylonitrile can be wholly or partially replaced by α-methyl styrene, methyl methacrylate or N-phenyl maleimide, in the presence of a mixture of a butadiene polymer latex (A) having a particle diameter d₅₀ of ≤320 nm, a particle diameter distribution width of 30 to 100 nm when measured as d₉₀-d₁₀ of the overall particle diameter distribution, and a gel content of ≤70 wt. %, and a butadiene polymer latex (B) having a particle diameter d₅₀ of ≥370 nm, a particle diameter distribution width of 50 to 500 nm when measured as d₉₀-d₁₀ of the overall particle diameter distribution, and a gel content of ≥70 wt. %, the butadiene polymer latices in each case containing 0 to 50 wt. % of a further vinyl monomer incorporated by copolymerisation and the mass ratio of graft monomers used to butadiene polymers used being 25:75 to 70:30,
II) at least one graft polymer obtained by a solution, bulk or suspension polymerisation of styrene and acrylonitrile in a weight ratio of 90:10 to 50:50, it being possible for the styrene and/or the acrylonitrile to be replaced wholly or partially by α-methyl styrene, methyl methacrylate or N-phenyl maleimide, in the presence of a rubber, the rubber containing 0 to 50 wt. % of a further vinyl monomer incorporated by copolymerisation and the mass ratio of graft monomers used to rubber used being 50:50 to 97:3, and optionally
III) at least one rubber-free copolymer of styrene and acrylonitrile in a weight ratio of 90:10 to 50:50, it being possible for the styrene and/or the acrylonitrile to be replaced wholly or partially by α-methyl styrene, methyl methacrylate or N-phenyl maleimide.

2. Thermoplastic moulding composition according to Claim 1, wherein the graft polymer I) has been prepared by adding the monomers to the mixture of the butadiene polymer latices (A) and (B) such that 55 to 90 wt. % of the monomers are added within the first half of the monomer addition time.

3. Thermoplastic moulding composition of ABS type comprising:
I) at least one graft polymer obtained by an emulsion polymerisation of styrene and acrylonitrile in a weight ratio of 90:10 to 50:50, it being possible for the styrene and/or the acrylonitrile to be wholly or partially replaced by α-methyl styrene, methyl methacrylate or N-phenyl maleimide, in the presence of a mixture of a butadiene polymer latex (A) having a particle diameter d₅₀ of 260 to 310 nm, a particle diameter distribution width of 40 to 80 nm when measured as d₉₀-d₁₀ of the overall particle diameter distribution, and a gel content of 40 to 65 wt. %, and a butadiene polymer latex (B) having a particle diameter d₅₀ of 380 to 450 nm, a particle diameter distribution width of 100 to 400 nm when measured as d₉₀-d₁₀ of the overall particle diameter distribution, and a gel content of 75 to 90 wt. %, the butadiene polymer latices in each case containing 0 to 50 wt. % of a further vinyl monomer incorporated by copolymerisation and the mass ratio of graft monomers used to butadiene polymers used being 25:75 to 70:30,
II) at least one graft polymer obtained by a solution, bulk or suspension polymerisation of styrene and acrylonitrile in a weight ratio of 90:10 to 50:50, it being possible for the styrene and/or the acrylonitrile to be replaced wholly or partially by α-methyl styrene, methyl methacrylate or N-phenyl maleimide, in the presence of a rubber, the rubber containing 0 to 50 wt. % of a further vinyl monomer incorporated by copolymerisation and the mass ratio of graft monomers used to rubber used being 70:30 to 95:5, and optionally,
III) at least one rubber-free copolymer of styrene and acrylonitrile in a weight ratio of 90:10 to 50:50, it being possible for the styrene and/or the acrylonitrile to be replaced wholly or partially by α-methyl styrene, methyl methacrylate or N-phenyl maleimide.

4. Thermoplastic moulding composition according to Claim 3, wherein the graft polymer I) is prepared by adding the monomers to the mixture of the butadiene polymer latices (A) and (B) such that 60 to 80 wt. % of the monomers are added within the first half of the monomer addition time.

5. Thermoplastic moulding composition according to Claim 1, further comprising at least one resin selected from the group consisting of an aromatic polycarbonate, an aromatic polyester carbonate, a polyester and a polyamide.

6. Use of the thermoplastic moulding composition according to Claim 1 for the production of mouldings.

## Revendications

1. Compositions de moulage thermoplastiques du type ABS comprenant
I) au moins un polymère greffé qui peut être obtenu par polymérisation en émulsion du styrène et de l'acrylonitrile en un rapport pondéral 90:10 à 50:50, où le styrène et/ou l'acrylonitrile peuvent être totalement ou partiellement remplacés par le α-méthylstyrène, le méthacrylate de méthyle ou le N-phényle maléimide, en présence d'un mélange d'un latex de polymère de butadiène (A) présentant un diamètre de particules d₅₀ ≤ 320 nm, une largeur de la distribution du diamètre de particules (mesurée comme d₉₀-d₁₀ à partir de la distribution intégrale du diamètre de particules) de 30 à 100 nm, et une teneur en gel ≤ 70 % en poids, et d'un latex de polymère de butadiène (B) présentant un diamètre de particules d₅₀ ≥ 370 nm, une largeur de la distribution du diamètre de particules (mesurée comme d₉₀-d₁₀ à partir de la distribution intégrale du diamètre de particules) de 50 à 500 nm, et une teneur en gel ≥ 70 % en poids, où les latex de polymère de butadiène renferment chacun de 0 à 50 % en poids d'un monomère vinylique supplémentaire sous forme copolymérisée, et où le rapport massique entre les monomères greffés utilisés et les polymères de butadiène utilisés est de 25:75 à 70:30,
II) au moins un polymère greffé qui peut être obtenu par polymérisation en solution, en masse ou en suspension du styrène et de l'acrylonitrile en un rapport pondéral de 90:10 à 50:50, où le styrène et/ou l'acrylonitrile peuvent être totalement ou partiellement remplacés par le α-méthylstyrène, le méthacrylate de méthyle ou le N-phényle maléimide, en présence d'un caoutchouc, où le caoutchouc renferme de 0 à 50 % en poids d'un monomère vinylique supplémentaire, et où le rapport massique entre les monomères greffés utilisés et le caoutchouc utilisé est de 50:50 à 97:3, et éventuellement
III) au moins un copolymère du styrène et de l'acrylonitrile, exempt de caoutchouc, en un rapport pondéral de 90:10 à 50:50, où le styrène et/ou l'acrylonitrile peuvent être totalement ou partiellement remplacés par α-méthylstyrène, le méthacrylate de méthyle ou le N-phényle maléimide.

2. Compositions de moulage thermoplastiques selon la revendication 1, dans lesquelles le polymère greffé I) a été préparé en chargeant les monomères dans le mélange des latex de polymère de butadiène (A) et (B), de telle sorte que de 55 à 90 % en poids des monomères soient ajoutés en quantité mesurée durant la première moitié de la durée de charge des monomères.

3. Compositions de moulage thermoplastiques du type ABS comprenant
I) au moins un polymère greffé qui peut être obtenu par polymérisation en émulsion du styrène et de l'acrylonitrile en un rapport pondéral 90:10 à 50:50, où le styrène et/ou l'acrylonitrile peuvent être totalement ou partiellement remplacés par le α-méthylstyrène, le méthacrylate de méthyle ou le N-phényle maléimide, en présence d'un mélange d'un latex de polymère de butadiène (A) présentant un diamètre de particules d₅₀ de 260 à 310 nm, une largeur de la distribution du diamètre de particules (mesurée comme d₉₀-d₁₀ à partir de la distribution intégrale du diamètre de particules) de 40 à 80 nm, et une teneur en gel de 40 à 65 % en poids, et d'un latex de polymère de butadiène (B) présentant un diamètre de particules d₅₀ de 380 à 450 nm, une largeur de la distribution du diamètre de particules (mesurée comme d₉₀-d₁₀ à partir de la distribution intégrale du diamètre de particules) de 100 à 400 nm, et une teneur en gel de 75 à 90 % en poids, où les latex de polymère de butadiène renferment chacun de 0 à 50 % en poids d'un monomère vinylique supplémentaire sous forme copolymérisée, et où le rapport massique entre les monomères greffés utilisés et les polymères de butadiène utilisés est de 25:75 à 70:30,
II) au moins un polymère greffé qui peut être obtenu par polymérisation en solution, en masse ou en suspension du styrène et de l'acrylonitrile en un rapport pondéral de 90:10 à 50:50, où le styrène et/ou l'acrylonitrile peuvent être totalement ou partiellement remplacés par le α-méthylstyrène, le méthacrylate de méthyle ou le N-phényle maléimide, en présence d'un caoutchouc, où le caoutchouc renferme de 0 à 50 % en poids d'un monomère vinylique supplémentaire sous forme copolymerisée, et où le rapport massique entre les monomères greffés utilisés et le caoutchouc utilisé est de 70:30 à 95:5, et éventuellement
III) au moins un copolymère du styrène et de l'acrylonitrile, exempt de caoutchouc, en un rapport pondéral de 90:10 à 50:50, où le styrène et/ou l'acrylonitrile peuvent être totalement ou partiellement remplacés par α-méthylstyrène, le méthacrylate de méthyle ou le N-phényle maléimide.

4. Compositions de moulage thermoplastiques selon la revendication 3, dans lesquelles le polymère greffé I) a été préparé en chargeant les monomères dans le mélange des latex de polymère de butadiène (A) et (B), de telle sorte que de 60 à 80 % des monomères soient ajoutés en quantité mesurée durant la première moitié de la durée de charge des monomères.

5. Compositions de moulage thermoplastiques selon la revendication 1, comprenant en outre au moins une résine choisie parmi un polycarbonate aromatique, un polyestercarbonate aromatique, un polyester et un polyamide.

6. Utilisation des compositions de moulage thermoplastiques selon la revendication 1, pour la production de pièces moulées.
